## Europäisches Patentamt

(19) **European Patent Office**

**Office européen des brevets**

(11) Publication number: **0 111 691**

**B1**

(12) **EUROPEAN PATENT SPECIFICATION**

(45) Date of publication of patent specification: **18.05.88**

(21) Application number: **83110687.7**

(22) Date of filing: **26.10.83**

(51) Int. Cl.⁴: **G 06 F 3/12**, G 06 F 15/20

(54) Data processing system with a printer setup through a remote display terminal.

(30) Priority: **20.12.82 US 450860**

(43) Date of publication of application:
**27.06.84 Bulletin 84/26**

(45) Publication of the grant of the patent:
**18.05.88 Bulletin 88/20**

(84) Designated Contracting States:
**DE FR GB IT**

(56) References cited:
**EP-A-0 066 038**

**IBM TECHNICAL DISCLOSURE BULLETIN, vol. 24, no. 11B, April 1982, pages 5885-5887, New York, US B.R. CAVILL et al.: "Printer data processing/word processing enhanced controller system"**

**ELEKTRIE, vol. 34, no. 9, 1980, pages 489-496, Berlin, DD W. DIETZE et al.: "Anwendung der Mikroelektronik in Bildschirmarbeitsplätzen und elektronischen Textverarbeitungssystemen"**

**COMPUTER DESIGN, vol. 19, no. 9, September 1980, page 68, Concord, Mass., US "Microprocessor controlled printer system emulates DEC-20 controller"**

(73) Proprietor: **International Business Machines Corporation**
**Old Orchard Road**
**Armonk, N.Y. 10504 (US)**

(72) Inventor: **Clements, Silous Floyd**
**6015 Tonkowa Trail**
**Georgetown Texas 78626 (US)**
Inventor: **Motola, Patrick Dean**
**4308 Yucatan Lane**
**Austin Texas 78759 (US)**
Inventor: **Swift, Shirley Fox**
**7307 Tanbark Cove**
**Austin Texas 78759 (US)**

(74) Representative: **Bonneau, Gérard**
**Compagnie IBM France Département de Propriété Intellectuelle**
**F-06610 La Gaude (FR)**

(56) References cited:
**IBM TECHNICAL DISCLOSURE BULLETIN, vol. 24, no. 8, January 1982, pages 4099-4100, New York, US P.R. DANIELS et al.: "Realtime processing of printer setup changes and sheetfeed requirements on an impact printer with sheetfeed attachement"**

Courier Press, Leamington Spa, England.

## Description

The present invention relates to data processing systems and particularly to data processing systems having a remote printer in which the data processor transmits the material to be printed as a data stream to the printer at a remote location where the printout from the processor is produced.

For many years in the data processing field, printing out of data from a central processor has been a fairly straightforward operation. In general, a plurality of printers were associated with central processor. These printers could be at locations or output stations adjacent to the central processors or remote from the central processor. In the latter case, of course, the central processor transmitted the alphanumeric data stream to be printed to the receiving printer which proceeded to produce the printout. With such conventional systems, the printers were in effect dedicated for the central processor, i.e., to primarily produce printout for the central processor. In operating such substantially dedicated printers, the operator at the printer could set repetitive formatting parameters such as line spacing, maximum lines per page, pitch, lines per inch, or characters per line on the printer to suit particular processor with which the printer was associated and such parameters would remain substantially unchanged for considerable periods of time. With data processing printouts, in general, format was not an important consideration and consequently formats were not changed frequently.

The recent years have seen the development of interactive text processing systems such as the system described in EP—A—066038 comprising a keyboard, a display, a printer, a diskette storage device and a microprocessor which has been programmed to cause interaction of the various system components to perform numerous text processing functions. One of the main functions of a text processing system is to create a document on the output printer which may, for example, be a single one-page letter or a multi-page manuscript. The interactive nature of these systems initially involves a query-response type mode of operation where the system displays the questions or available options to the operator and, perhaps, a number of responses. The operator then indicates the response by pressing a defined character key or by keying in the requested data. By such a procedure, the various parameters of a document format may be defined to the system. The system is then placed in the text entry mode so that actual text is keyed in by the operator and displayed on the screen in a format generally resembling that which would appear on the printed document.

However, there has been a trend towards the combination of data processing facilities and text processing facilities into electronic distribution networks which are capable of transmitting and printing out both data processing and text processing documents at any one of a plurality of workstations within the network.

Because of the above developments in the data process field, there has been an increasing need for systems having printers which are not formatted to support any particular data processor but rather capable of providing printouts from a wide variety of data processors or even text processors capable of transmitting a data stream to that particular printer output station.

Consequently, printers which require a "hands on" operator to change the above described repetitive formatting parameters cannot serve efficiently these systems. The system must have the capability of effectively and quickly switching one particular printout format to another.

This problem has been partially solved by the system described in the Article "Printer data processing/word processing enhanced controller system" published in the IBM Technical Disclosure Bulletin, vol 24, n° 11B, 1982. This system comprises a host processor, a remote printer controlled by the host processor to print alphanumeric data communicated by the host processor, and an intermediate processor for controlling the set-up of the printer format parameters. But such a system presents a drawback in that it does not permit the operator to interactively select and enter the format parameters.

Therefore the object of the invention is a system as described in the cited Article characterized in that the intermediate processor includes an interactive terminal with a keyboard and a display, means for disenabling printing by said printer of the alphanumeric data being communicated from said processor after the operator has requested the printer format parameter menu by means of said keyboard, means for displaying on said display the printer format parameter menu, means for enabling printing by said printer of said alphanumeric data with new format parameters after the operator has entered parameter selection by means of said keyboard, and means for changing the format parameters utilized by said remote printer for printing said documents in response to the format parameters entered by the operator.

Referring now to the drawings, wherein a preferred embodiment of the invention is illustrated, and wherein like reference numerals are used throughout to designate like parts;

Fig. 1 is a logical block diagram showing the system of the present invention in a generalized form.

Fig. 2 is a logical block diagram showing the memory organization in the intermediate processor which is involved in setting up of the printer in accordance with the present invention.

Fig. 3 shows a flow chart of a printing operation wherein alphanumeric data from the host processor is printed on a remote printer which provides a document with format parameters controlled by an intermediate processor.

Fig. 4 is a flow chart of a procedure wherein the operator at the display of the intermediate processor who wishes to change formatting parameters brings up the menu of the alterable formatting parameters.

Fig. 5 is a flow chart of the procedure involved in the operator working from the menu of Fig. 4 to affect the changes in the formatting parameters of the document to be produced.

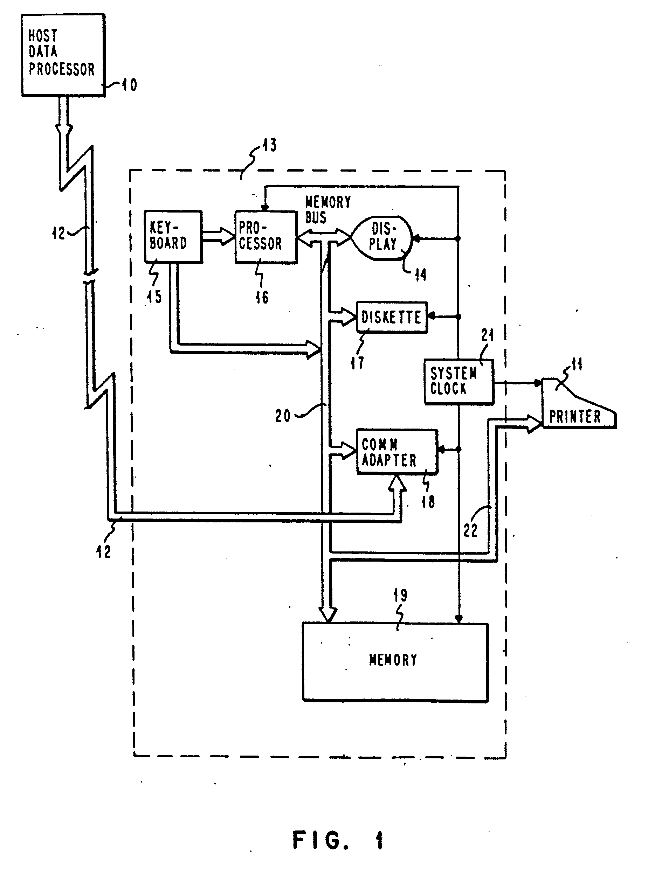

With reference to Fig. 1, a generalized view of the apparatus which may be used to carry out the present invention is shown. The overall system comprises a central data processor 10 such as an IBM 370 computer which has data to be printed on a printer 11 which is remote from the central processor 10. Host processor 10 communicates with printer 11 through a communication linkage 12 which is represented by a bus.

Communication between host processor 10 and printer 11 is through an intermediate processor 13 having an interactive display terminal 14. Processor 13 which may be a text processor includes a communications adapter 18 connected to bus 12. In processor 13, the operator accesses the processor through operator control keys on keyboard 15. The keyboard drives an internal microprocessor 16 which is operably connected to the visual display terminal 14 as well as to a diskette storage means 17 and a random access memory 19 through memory bus 20. A system clock 21 is provided for timing functions within the text processor 13. The printer 11 communicates with memory 19 over bus 22. Memory 19 provides means for storing data within the processor 13 and the programs for controlling display 14 to display data or to control printer 11 to print data. Memory 19 includes a number of data areas and functional programs for operating the data input into it through bus 20 from communications adapter 18.

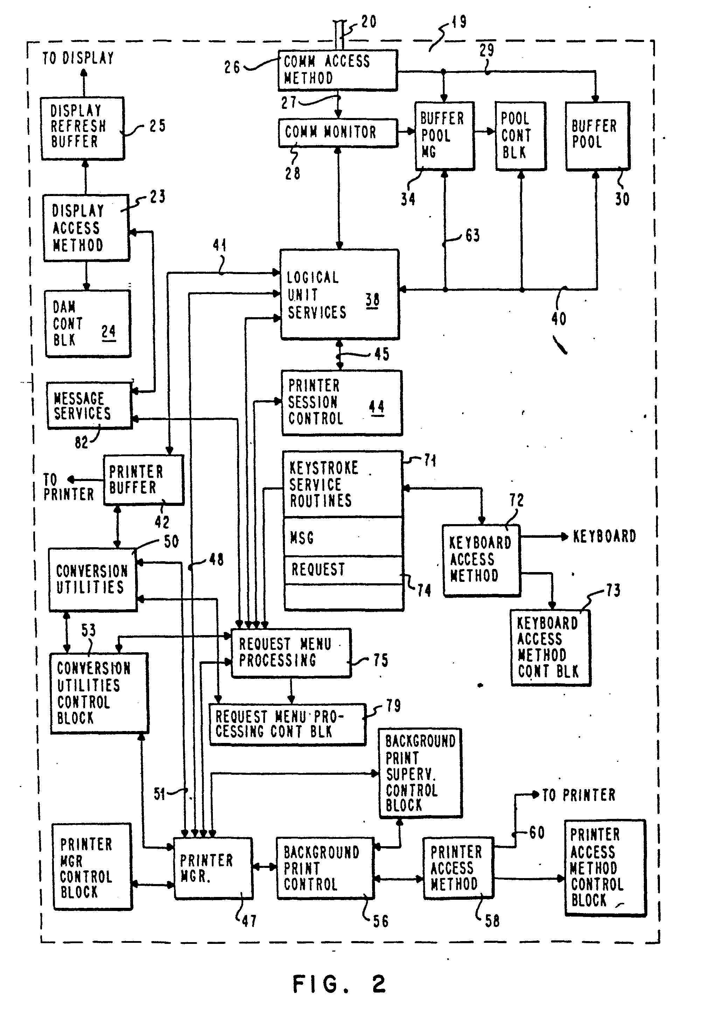

Fig. 2 shows the elements of memory 19 and particularly the functional programs which relate to the printing control operation of the present invention.

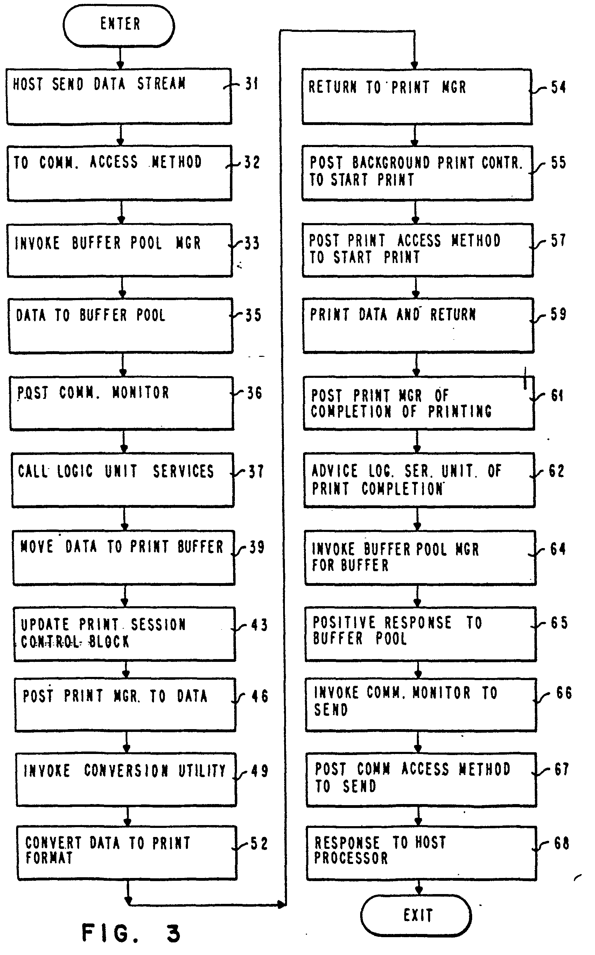

The displaying of data on display 14 of Fig. 1 may be done in any conventional manner. In general, the data to be displayed must be communicated to the display access method 23 which is in memory 19 in Fig. 2 and under the control of the display access method control block 24. The data from the display access method 23 is applied to display refresh buffer 25 which operates in a conventional manner referred to above to maintain alphanumeric text representative of the stored data on the visual display screen 14 of Fig. 1. In subsequent descriptions of the operation of the present invention there will be described operations wherein the host data processor 10 communicates with memory 19 through communication linkage 12 and communications adapter 18 which accesses memory 19 through bus 20. In such an operation, the data from the communications adapter 18 enters memory 19 (Fig. 2) on bus 20 and is input into communications access method 26 after which the data is input over channel 27 to communications monitor 28. Information from communication access method 26 is input over bus 29 to buffer pool 30. The remaining functional units in Fig. 2 will now be described in connection with the data processing routines of Figs. 3—5.

With respect to Fig. 3, we will describe a printing operation of a data stream provided by the host data processor 10 through intermediate processor 13 to printer 11. The printing operation is initiated by the host 10 sending a data stream representative of the alphanumeric data to be printed on printer 11 over communication linkage 12 to intermediate processor 13 where the data is received in communication adapter 15 (step 31, Fig. 3). This data stream is forwarded to communication access method 26 in memory 19 (step 32). As a result, step 33, communications access method invokes buffer pool manager 34 which allocates the section of the buffer pool 30 for the storage of the received data stream. Then, step 35, the communication access method 26 sends the data over bus 29 to the designated portion of buffer pool 30, after which, communication access method 26 posts or updates communications monitor 28 to indicate the data stored in buffer pool 30 (step 36). At this point, step 37, communications monitor 28 calls logical unit services 38, and (step 39) under the control of the logical unit services 38 the data is moved along bus 40 through logical unit services 38 and bus 41 to printer buffer 42. Then, step 43, printer session control block 44 is updated over bus 45 to reflect what is stored in printer buffer 42. At this point, step 46, logical unit services 38 posts or activates printer manager function 47 over bus 48 to commence with the printing of the data. In response, step 49, printer manager 47 invokes conversion utilities unit 50 over bus 51 to convert the data in print buffer to the selected printing format. Conversion utilities unit 50 then proceeds to convert the data stored in printer buffer 42 to the desired print format (step 52) by reading the data from printer buffer 42 and applying values stored in conversion utilities control block 53 to convert the data. The converted data is stored in conversion utilities control block 53.

Upon the completion of the conversion, conversion utilities unit 50 returns to the printer manager 47 (step 54) with an indication of a successful completion of the conversion of the data to the print format. Then, step 55, printer manager 47 posts the background print control unit 56 to commence with the printing of the data whereupon background print control unit 56 posts or invokes (step 57) the printer access method 58 to print the data stored in conversion utilities control block 53. As a result, printer access method 58 provides an output over line 60 to the printer to activate the printer to print the data stored in conversion utilities control block 53 (step 59). Then, the process is returned to background print control 56.

At this point, step 61, background print control unit 56 posts or advises the printer manager 47 of the successful completion of the printing. In turn, step 62, printer manager 47 calls logical unit services 38 to advise that a printing has been successfully completed. The logical unit services 38 then invokes buffer pool manager 34 over bus 63 to provide the section in buffer pool 30 in which logical unit services 38 can formulate and store a response (step 64). The logical unit services 38 then builds (step 65) a positive response in buffer pool 30 over bus 40. At this point, step 66, the logical unit services 38 posts or invokes communications monitor 28 to send a response data stored in buffer pool 30. As a result, step 67, communication monitor posts or activates communication access method 26 to send the data from buffer pool 30, whereupon, step 68, the communication access method 26 sends the response formulated in buffer pool 30 indicative of the completion of the printing of the data back to the host processor 10 via bus 20 through communication adapter 18 and communications linkage 12.

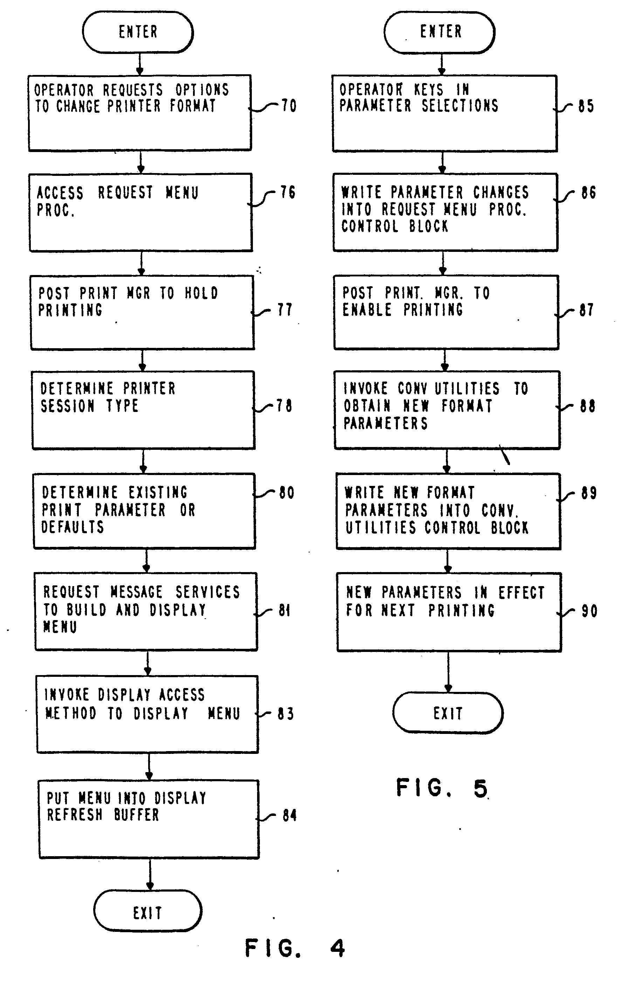

Now with reference to Fig. 4, the operator utilizing keyboard 15 and interactive display terminal may select format parameters to be implemented on the printer 11 in order to format any data to be subsequently sent from data processor 10 into a selected repetitive document structure. In order to affect these changes, the intermediate processor 13 is placed in a mode wherein menus may be displayed on display terminal 14. This is the text processing mode or session. Initially, step 70, the operator at keyboard 15 in Fig. 1 requests the options to change the printer format (step 70). The operator at keyboard 15 accesses keystroke services routine function 71 through the keyboard access method 72 (Fig. 2) under the control of the keyboard access method control logic block 73. Through the keystroke services routine 71 and particularly the request subroutine 74, the request menu processing function 75 in the memory of Fig. 2 is accessed (step 76). In response, step 77, the request menu processing function 75 posts or requests the printer manager function 47 to hold any printing which may be taking place on printer 11. At this point, step 78, the request menu processing function 75 under the control of the request menu processing control block 79 first determines from printer session control function 44 the type of printer session currently in affect. In addition, step 80, the request menu processing function 79 also determines the existing print parameters or defaults from conversion utilities control block 53. It should be noted that a default is a parameter which will automatically take affect if the operator makes no other choice.

At this point, step 81, the request menu processing function 79 invokes or activates the message services function 82 to commence the building and display of the printer format parameter menu. In response, the message services function 82 invokes the display access method 23 to display the menu (step 83). Then, to complete the display, step 84, the display access method puts the built menu into display refresh buffer 25 from which it is displayed on display terminal 14.

Now with reference to Fig. 5, we are at a stage when processing in Fig. 4 has been completed and the menu for the selection of document format parameters for the printer is displayed to the operator. The operator at the keyboard 15 keys in parameter selections, step 85. This is done as previously described through keyboard 15 and keyboard access method 72 to key stroke services routine 71. Some typical formatting parameters which the operator may select from the menu relate to: 1) line spacing, 2) lines per inch, 3) maximum characters per line, 4) maximum lines per page, 5) pitch.

When the operator enters these changes, the request menu processing function 75 writes these parameter changes into the request menu processing control block 79 (step 86 in Fig. 5). At this point, step 87, the request menu processing function 75 posts printer manager 47 to once again enable the printing which had been halted in the procedure of Fig. 4. At this point, step 88, printer manager 47 invokes the conversion utilities function 50 to obtain from the request menu processing control block 79 the new printer document format parameters which have been keyed in by the operator. Conversion utilities function 50 then proceeds (step 89) to write these new document format parameters into conversion utilities control block 53. Finally, the new format parameters are in effect (step 90) for the next printing operation carried out.

**Claims**

1. Data processing system comprising a host processor (10), a remote printer (11) controlled by said host processor to print alphanumeric data from a data stream communicated from said host processor to said printer, and an intermediate processor connected between said host processor and said remote printer for controlling the set-up of format parameters of documents containing said alphanumeric data to be printed by said printer; said system being characterized in that said intermediate processor comprises:

— an interactive terminal with a keyboard (15) and a display (14),

means for disenabling printing by said printer of the alphanumeric data being communicated from said host processor, after the operator has requested the printer format menu by means of said keyboard;

means for displaying on said display the printer format parameter menu,

means for enabling printing by said printer of said alphanumeric data with new format parameters, after the operator has entered parameter selection by means of said keyboard, and

means for changing the format parameters utilized by said remote printer for printing said documents, in response to the format parameters entered by the operator.

2. The data processing system according to claim 1 wherein said format parameters are parameters repetitive in a plurality of documents printed by said printer (11).

3. The data processing system according to claim 1 or 2 wherein said host processor (10) is a data processor and said intermediate processor (13) is a text processor.

4. The data processing system according to claim 3 wherein said format parameters include parameters related to the format of lines of alphanumeric characters printed on a page.

5. The data processing system according to claim 3 wherein said format parameters include parameters related to the format of alphanumeric characters printed in the lines of said document.

6. The data processing system according to claim 3 wherein said format parameters include parameters related to page size in a document having a plurality of pages.

## Patentansprüche

1. Datenverarbeitungssystem mit einem Zentralprozessor (10), einem entfernten Drucker (11), gesteuert durch besagten Zentralprozessor, um alphanumerische Daten von einem Datenstrom zu drucken, der vom besagten Zentralprozessor dem besagten Drucker mitgeteilt wird, und einem Zwischenprozessor, angeschlossen zwischen dem besagtem Zentralprozessor und dem besagten entfernten Drucker für die Steuerung der Einstellung der Formatparameter der Texte, welche besagte alphanumerischen Daten enthalten, die auf besagtem Drucker ausgedruckt werden sollen; besagtes System dadurch gekennzeichnet, dass der besagte Zwischenprozessor enthält:

— ein interaktives Terminal mit einer Tastatur (15) und einer Anzeige (14);

Mittel, welche das Ausdrucken der alphanumerischen Daten, die vom besagten Zentralprozessor mitgeteilt wurden, durch den besagten Drucker verhindern, wenn der Bediener über die besagte Tastatur das Menü der Druckerformatparameter aufgerufen hat;

Mittel für die Anzeige des Druckerformatparametermenüs auf der besagten Anzeigevorrichtung;

Mittel für die Freigabe des Ausdrucks der besagten alphanumerischen Daten mit neuen Formatparametern durch den besagten Drucker, nachdem der Bediener die Parameterauswahl über die besagte Tastatur eingegeben hat, und

Mittel für die Änderung der Formatparameter, die vom besagten entfernten Drucker für den Druck der besagten Unterlagen verwendet werden, in Anwort auf die vom Bediener eingegebenen Formatparameter.

2. Datenverarbeitungssystem gemäss Anspruch 1, in dem besagte Formatparameter wiederholte Parameter in einer Mehrzahl von Dokumenten sind, die vom besagten Drucker (11) gedruckt werden.

3. Datenverarbeitungssystem gemäss Anspruch 1 oder 2, in dem der besagte Zentralprozessor (10) und der besagte Zwischenprozessor (13) ein Textverarbeitungssystem bilden.

4. Datenverarbeitungssystem gemäss Anspruch 3, in dem besagte Formatparameter Parameter enthalten, die sich auf das Zeilenformat der auf einer Seite gedruckten alphanumerischen Zeichen beziehen.

5. Datenverarbeitungssystem gemäss Anspruch 3, in dem besagte Formatparameter Parameter enthalten, die sich auf das Format der alphanumerischen Zeichen beziehen, die in den Zeilen des besagten Dokuments gedruckt werden.

6. Datenverarbeitungssystem gemäss Anspruch 3, in dem besagte Formatparameter Parameter enthalten, die sich auf die Seitengrösse in einem Dokument mit mehreren Seiten beziehen.

## Revendications

1. Système de traitement de données comprenant un processeur principal (10), une imprimante éloignée (11) commandée par ledit processeur pour imprimer des données alphanumériques provenant d'une suite de données qui lui sont transmises par ce dernier, et un processeur intermédiaire connecté entre ledit processeur principal et ladite imprimante éloignée afin de commander la mise en place des paramètres de format de documents contenant lesdites données alphanumériques à imprimer par ladite imprimante, ledit système étant caractérisé par le fait que ledit processeur intermédiaire comprend:

un terminal interactif comportant un clavier (15) et un dispositif d'affichage (14),

des moyens pour interdire l'impression par ladite imprimante des données alphanumériques reçues dudit processeur principal, après que l'opérateur aît demandé à l'aide dudit clavier le menu des paramètres de format de l'imprimante,

des moyens pour afficher ledit menu dur ledit dispositif d'affichage,

des moyens pour autoriser l'impression par ladite imprimante desdites données alphanumériques avec de nouveaux paramètres de format, après que l'opérateur aît introduit une sélection des paramètres à l'aide dudit clavier, et

des moyens pour modifier les paramètres de format utilisés par ladite imprimante éloignée pour imprimer lesdits documents, en réponse à l'introduction par l'opérateur des paramètres de format.

2. Système de traitement de données selon la revendication 1, caractérisé en ce que lesdits paramètres de format sont des paramètres répétitifs dans une pluralité de documents imprimés par ladite imprimante (11).

3. Système de traitement de données selon la revendication 1 ou 2, caractérisé en ce que ledit processeur principal (10) est un processeur de données et en ce que ledit processeur intermédiaire (13) est un processeur de texte.

4. Système de traitement de données selon la revendication 3, caractérisé en ce que lesdits paramètres de format comprennent des paramètres afférents aux lignes de caractères alphanumériques imprimés sur une page.

5. Système de traitement de données selon la revendication 3, caractérisé en ce que lesdits paramètres de format comprennent des paramètres afférents au format des caractères alphanumériques imprimés dans les lignes dudit document.

6. Système de traitement de données selon la revendication 3, caractérisé en ce que lesdits paramètres de format comprennent des paramètres afférents aux dimensions des pages dans un document comportant une pluralité de pages.

FIG. 1

FIG. 2

FIG. 3

# 0 111 691

## FIG. 4

```
        ( ENTER )
            |
            v
+-----------------------+
| OPERATOR REQUESTS OPTIONS |──70
| TO CHANGE PRINTER FORMAT  |
+-----------------------+
            |
            v
+-----------------------+
| ACCESS  REQUEST MENU  |──76
| PROC.                 |
+-----------------------+
            |
            v
+-----------------------+
| POST PRINT MGR TO HOLD |──77
| PRINTING               |
+-----------------------+
            |
            v
+-----------------------+
| DETERMINE PRINTER     |──78
| SESSION  TYPE         |
+-----------------------+
            |
            v
+-----------------------+
| DETERMINE EXISTING    |──80
| PRINT PARAMETER OR    |
| DEFAULTS              |
+-----------------------+
            |
            v
+-----------------------+
| REQUEST MESSAGE SERVICES |──81
| TO BUILD AND DISPLAY     |
| MENU                     |
+-----------------------+
            |
            v
+-----------------------+
| INVOKE DISPLAY ACCESS |──83
| METHOD TO DISPLAY  MENU |
+-----------------------+
            |
            v
+-----------------------+
| PUT MENU INTO DISPLAY |──84
| REFRESH BUFFER        |
+-----------------------+
            |
            v
        ( EXIT )
```

## FIG. 5

```
        ( ENTER )
            |
            v
+-----------------------+
| OPERATOR KEYS IN      |──85
| PARAMETER SELECTIONS  |
+-----------------------+
            |
            v
+-----------------------+
| WRITE PARAMETER CHANGES |──86
| INTO REQUEST MENU PROC. |
| CONTROL BLOCK           |
+-----------------------+
            |
            v
+-----------------------+
| POST PRINT. MGR. TO   |──87
| ENABLE PRINTING       |
+-----------------------+
            |
            v
+-----------------------+
| INVOKE CONV UTILITIES TO |──88
| OBTAIN NEW FORMAT        |
| PARAMETERS               |
+-----------------------+
            |
            v
+-----------------------+
| WRITE NEW FORMAT      |──89
| PARAMETERS INTO CONV. |
| UTILITIES CONTROL BLOCK |
+-----------------------+
            |
            v
+-----------------------+
| NEW PARAMETERS IN EFFECT |──90
| FOR NEXT PRINTING        |
+-----------------------+
            |
            v
        ( EXIT )
```

4